# EUROPÄISCHE PATENTSCHRIFT

(11) **EP 3 558 077 B1**
(45) Veröffentlichungstag und Bekanntmachung des Hinweises auf die Patenterteilung: **17.02.2021**
(21) Anmeldenummer: 17826503.9
(22) Anmeldetag: 20.12.2017
(51) Int. Cl.: A47J 31/36, A47J 31/44, A47J 31/60

(54) **BRÜHMODUL UND GETRÄNKEZUBEREITUNGSMASCHINE**
BREWING MODULE AND MACHINE FOR MAKING BEVERAGES
MODULE D'ÉBOUILLANTAGE ET MACHINE DE PRÉPARATION DE BOISSONS

(30) Priorität: 22.12.2016 EP 16206249
(43) Veröffentlichungstag der Anmeldung: 30.10.2019
(73) Patentinhaber: Tchibo GmbH, 22297 Hamburg (DE)
(72) Erfinder: HILCKMANN, Marius, 48301 Nottuln (DE); KROOS, Friedrich, 22359 Hamburg (DE)
(74) Vertreter: Frei Patent Attorneys
(86) Internationale Anmeldenummer: PCT/EP2017/083930
(87) Internationale Veröffentlichungsnummer: WO 2018/115187

(56) Entgegenhaltungen:
- WO-A1-2016/087190
- CH-A1- 707 374

## Beschreibung

Die Erfindung betrifft Extraktionsgeräte zum Zubereiten von Getränken oder dergleichen aus einem in einer Portionskapsel enthaltenen Extraktionsgut, beispielsweise gemahlenem Kaffee. Sie betrifft insbesondere ein Brühmodul für ein Extraktionsgerät, ein Kapselerkennungsmodul sowie eine Getränkezubereitungsmaschine mit einem solchen Brühmodul und/oder Kapselerkennungsmodul.

Extraktionsgeräte zum Zubereiten von Getränken oder dergleichen aus einem in einer Portionsverpackung vorhandenen Extraktionsgut sind beispielsweise als Kaffee- oder Espressomaschinen bekannt. In vielen entsprechenden Systemen sind die Portionsverpackungen als Kapseln ausgebildet, in denen das Extraktionsgut bspw. luftdicht abgeschlossen ist. Für die Extraktion wird die Kapsel angestochen, beispielsweise an zwei einander gegenüberliegenden Seiten. Auf der ersten Seite wird dann eine Extraktionsflüssigkeit - im Allgemeinen heisses Wasser - eingeleitet. Auf der zweiten Seite wird das Extraktionsprodukt aus der Kapsel ausgeleitet. Dies geschieht in einem sogenannten Brühmodul. Ein solches weist eine Brühkammer auf, in der die Kapsel aufgenommen wird. Besonders beliebt sind Brühmodule, bei welchen die Kapsel eingeworfen und die Brühkammer manuell mittels eines Bedienhebels oder automatisch motorisiert verschlossen wird, wobei beim erneuten Öffnen der Brühkammer nach dem Brühvorgang die Kapsel selbsttätig aus der Brühkammer entfernt und in einen Kapselbehälter ausgeworfen wird. Solche Brühmodule mit selbsttätigem Kapselauswurf sind im Allgemeinen als horizontale Brühmodule ausgebildet, d.h. der Kapseleinwurf erfolgt von oben, das Verschliessen der Brühkammer ist eine horizontale Relativbewegung zweier Brühmodulteile, die Brühflüssigkeit fliesst im wesentlichen horizontal, und der Kapselbehälter ist unterhalb der Brühkammer ausgebildet.

Ein Problemfeld in diesem Zusammenhang betrifft das Erfassen von Kapseleigenschaften, beispielsweise das Auslesen von auf der Kapsel angebrachten Informationen zum Auslösen eines Brühprozesses abhängig von diesen Informationen. Eine Möglichkeit dafür besteht darin, die Kapsel mit einer geeigneten Markierung oder Farbkombination zu versehen und diese optisch zu erfassen. Dies geschieht beispielsweise mit einer Kamera. Weil die Brühkammer selbst im Betrieb zu heiss und verschmutzungsanfällig ist, geschieht das Erfassen der Informationen im Allgemeinen vor dem Brühprozess, während sich die Kapsel noch ausserhalb der Brühkammer befindet, an einer Kapselerkennungsposition. Allerdings ergeben sich auch dann praktische Probleme bei einem solchen in unmittelbarer Nähe der Brühkammer durchgeführten Prozess. Aufgrund der von der Brühkammer abgegebenen Wärme, von Wasserdampf und von Verschmutzungen ist es einerseits wünschenswert, eine Kamera möglichst entfernt von der Brühkammer und von dieser abgeschirmt anzubringen. Andererseits können entsprechende Abschirmungen - beispielsweise in der Form von Fenstern - den Ausleseprozess selbst erschweren, insbesondere wenn sie beschlagen oder verschmutzen. Die üblichen Massnahmen gegen ein solches Beschlagen oder Verschmutzen sind Beschichtungen, die jedoch in einer Brühkammer-Umgebung nur beschränkt wirksam sind.

In der WO 2016/087192 wird vorgeschlagen, zu diesem Zweck einen Lüfter vorzusehen, welcher auf der Seite eines solchen abschirmenden Fensters - es kann auch eine Linsenfunktion haben - einen Luftstrom erzeugt. Damit wird dem Problem des Beschlagens zuverlässig vorgebeugt. Allerdings ist ein solcher Lüfter relativ teuer und erhöht deshalb die Kosten einer Getränkezubereitungsmaschine; ausserdem beansprucht er viel Platz.

Es ist Aufgabe der Erfindung, eine Getränkezubereitungsmaschine und ein Brühmodul für eine solche zur Verfügung zu stellen, welche Nachteile des Standes der Technik überwinden, und welche eine möglichst einfache Konstruktion aufweisen und trotzdem eine zuverlässige optische Kapselerkennung in der Nähe der Brühkammer ermöglichen. Vorzugsweise sollte die Konstruktion auch für die Implementierung als manuell zu betätigendes Brühmodul geeignet sein.

Gemäss der Erfindung wird ein Brühmodul zum Zubereiten eines Brühgetränks aus einer Portionskapsel zur Verfügung gestellt, welches aufweist:
- ein erstes Brühmodulteil und ein relativ zu diesem zwischen einer ersten Brühmodulteil-Position und einer zweiten Brühmodulteil-Position bewegbares zweites Brühmodulteil,
- wobei eine Bewegung des zweiten Brühmodulteils relativ zum ersten Brühmodulteil von einem manuellen oder motorisierten Antrieb über einen Übertragungsmechanismus antreibbar ist,
- wobei in der zweiten Brühmodulteil-Position durch das erste und zweite Brühmodulteil eine Brühkammer gebildet wird, welche die sich in einer Brühposition befindende Portionskapsel beim Brühvorgang mindestens teilweise umgibt, wobei das Brühmodul eingerichtet ist, durch das Einleiten einer Brühflüssigkeit in die Kapsel ein Brühgetränk zu brühen und dieses aus der Kapsel abzuleiten;
- wobei das Brühmodul ausserdem eine Kapselerkennungsvorrichtung mit einem optischen Sensor, insbesondere eine Kamera, zum Erfassen von optischen Eigenschaften der Kapsel, welche sich an einer Kapselerkennungsposition befindet, sowie mit einem Fensterelement aus einem transparenten Material zwischen der Kapselerkennungsposition und dem optischen Sensor aufweist.

Ein solches Fensterelement kann eine konventionelle Fensterscheibe aus einem transparenten Material (bspw. Glas oder ein transparenter Kunststoff) mit planparallelen Oberflächen sein, oder es kann optional eine Linsenfunktion haben. Insbesondere kann das Fensterelement auch als Kameralinse der Kamera wirken.

Das Brühmodul zeichnet sich durch eine mechanisch antreibbare Blasvorrichtung zum Erzeugen eines Luftstroms aus, welche angeordnet ist, einen Luftstrom auf der Seite des Fensterelements zur Kapselerkennungsposition hin zu erzeugen. Die Blasvorrichtung ist so montiert, dass sie durch eine Relativbewegung von Elementen des Brühmoduls angetrieben wird, weiche Relativbewegung durch den Antrieb oder den Übertragungsmechanismus erzeugt wird.

Diese Relativbewegung der Elemente des Brühmoduls kann insbesondere eine Bewegung sein, die im normalen Betrieb ohnehin stattfindet, also beispielsweise die Betätigung eines Betätigungselements zum Schliessen des Brühmoduls und/oder das Schliessen der Brühkammer. Die genannten Elemente des Brühmoduls, welche der Relativbewegung unterworfen sind, können insbesondere ein solches Betätigungselement, das zweite Brühmodulteil, Elemente des Übertragungsmechanismus und/oder gehäusefeste Teile sein.

Das Fensterelement ist dasjenige transparente Teil der Kapselerkennungsvorrichtung, welches das lichtempfindliche Element des optischen Sensors von dem Bereich trennt, an welchem sich die Kapsel befindet und durch welches hindurch die Kapselerkennung stattfindet. Wenn mehrere solche transparente Elemente hintereinander vorhanden sind, ist es das von der Kamera her betrachtet äusserste, der Kapselerkennungsposition am nächsten liegende solche transparente Element. Dieses transparente Teil ist im Allgemeinen ein Fenster mit oder ohne Linsenfunktion (in diesem Kontext wird auch eine Kameralinse als "Fenster" bezeichnet, wenn sie gleichzeitig den Bereich des lichtempfindlichen Elements vom Bereich der Kapsel trennt).

Der Luftstrom wird kapselseitig über das Fenster geführt, um einem Beschlagen des Fensters entgegenzuwirken und auch um es zu reinigen.

Die Blasvorrichtung wird in Ausführungsformen zwischen zwei Ankopplungspunkten angetrieben, indem diese Ankopplungspunkte relativ zueinander bewegt werden, und zwar so, dass sich ihr Abstand verringert oder vergrössert. Dadurch kann die Blasvorrichtung in der Art eines Blasebalgs wirken.

Gemäss diesem Prinzip weist die Blasvorrichtung ein erstes Blasvorrichtung-Element und ein zweites Blasvorrichtung-Element auf, zwischen denen sich ein aktives Volumen bildet, welches durch eine Relativbewegung des ersten und zweiten Blasvorrichtung-Elements vergrösser- oder verkleinerbar ist. Das aktive Volumen ist mit mindestens einem Luftanschluss verbunden, durch welchen beim Bewegen des ersten und zweiten Blasvorrichtung-Elements relativ zueinander Luft ins aktive Volumen gesaugt oder Luft aus dem aktiven Volumen geblasen wird.

Gemäss einem ersten Beispiel kann die Blasvorrichtung einen Zylinder (als erstes Blasvorrichtung-Element) und einen darin verschiebbaren Kolben (als zweites Blasvorrichtung-Element) aufweisen, welcher durch Bewegung im Zylinder ein aktives Volumen vergrössert oder verkleinert und so entweder Luft in den Zylinder saugt oder Luft aus dem Zylinder hinauspresst. Indem der Zylinder zwei Luftanschlüsse mit entsprechenden Ventilen aufweist, kann so eine Pumpwirkung erzielt werden, wobei Luft beim Vergrössern des aktiven Volumens von einem bestimmten Ort her angesaugt wird und beim Verkleinern des Volumens an einen anderen Ort in der Nähe des Fensterelements ausbläst.

Gemäss einem zweiten Beispiel kann die Blasvorrichtung als Blasebalg im engeren Sinn ausgebildet sein, indem die Bewegung der Ankopplungspunkte eine Bewegung zweier Platten als die Blasvorrichtung-Elemente relativ zueinander bewirkt, zwischen denen eine flexible, beispielsweise geeignet gefaltete Membran ein Volumen umgibt, dessen Grösse sich bei der relativen Bewegung ändert. Auch gemäss diesem Beispiel können zwei mit Ventilen versehene Luftanschlüsse vorhanden sein, wie das von Blasebälgen bekannt ist.

Weitere Arten von Blasvorrichtungen, welche durch translatorische Bewegungen und/oder Schwenkbewegungen oder eventuell Drehbewegungen (bspw. eines Zahnrads des Übertragungsmechanismus) antreibbar sind, sind ebenfalls denkbar.

Es ist auch denkbar, dass durch geeignete Gestaltung der Blasvorrichtung und/oder eines von der Blasvorrichtung zum Fensterelement führender Verbindungsschlauchs und einer Ausströmöffnung zum Fensterelement der Luftstrom nach dem Schliessen noch eine gewisse Zeit andauert, indem die Blasvorrichtung bzw. der Verbindungsschlauch (insbesondere durch Ausnutzen von Elastizität verwendeter Materialien in Kombination mit einer drosselnden Ausströmöffnung), oder auch ein zwischengeschalteter ballonartiger Speicher, Luft speichert. Dadurch kann auch nach der Relativbewegung der Elemente des Brühmoduls noch eine freihaltende Wirkung auf das Fensterelement bewirkt werden, bspw. während des eigentlichen Kapselerkennungsvorgangs.Während zwei mit Ventilen versehene Luftanschlüsse der Blasvorrichtung eine gerichtete Luftführung ermöglichen -- die Luft wird von einem Ort her angesaugt und an einen anderen Ort, zum Fensterelement hin, ausgeblasen - ist auch eine Lösung mit bloss einem Luftanschluss nicht ausgeschlossen. Die Luft wird dann nicht nur beim Fensterelement ausgeblasen, sondern dort auch angesaugt. Es entsteht auch bei dieser Lösung ein Luftstrom über das Fensterelement, welcher einem Beschlag und einer Verschmutzung entgegenwirken kann.

In einer Gruppe von Ausführungsformen ist der Antrieb ein rein mechanischer Antrieb. Insbesondere kann das Brühmodul ein Bedienelement aufweisen, welches manuell zwischen einer ersten und einer zweite Bedienelement-Position bewegbar ist, um über den Übertragungsmechanismus direkt oder indirekt eine Bewegung des zweiten Brühmodulteils relativ zum ersten Brühmodulteil zu bewirken. Ein solches Bedienelement gehört dann zum mechanischen Antrieb oder bildet diesen.

Ein solches Bedienelement kann insbesondere ein Bedienhebel sein, welcher durch eine Kippbewegung von oben nach unten von der ersten in die zweite Position gebracht werden kann. In der zweiten Position verschliesst beispielsweise der Bedienhebel eine Kapseleinlegeöffnung, welche durch ein Gehäuse der Getränkezubereitungsmaschine - beispielsweise der Brühmoduls - gebildet wird.

In Ausführungsformen der genannten Gruppe ist die Blasvorrichtung zwischen einem ersten, am Bedienelement angeordneten Ankopplungspunkt und einem zweiten, beispielsweise gehäusefesten Ankopplungspunkt angeordnet. Gegebenenfalls können die genannten Ankopplungspunkte mit dem ersten bzw. zweiten Blasvorrichtung-Element fest verbunden sein.

Das Brühmodul kann in Ausführungsformen der ersten Gruppe ausserdem einen Energiespeicher aufweisen, der eingerichtet ist, durch Bewegen des Bedienelements von der ersten in die zweite Position in das Brühmodul eingekoppelte Energie zwischenzuspeichern und durch eine Freigabe ausgelöst in eine Bewegung von der ersten Brühmodulteil-Position in die zweite Brühmodulteil-Position wieder umzusetzen.

Ein solcher Energiespeicher kann insbesondere eine Feder sein, wobei dann das Bewegen des Bedienelements in die zweite Position entgegen der Kraft der Feder erfolgt und die Feder dadurch gespannt wird. Nach der Freigabe wird die Feder dadurch entspannt, dass das zweite Brühmodulteil relativ zum ersten Brühmodulteil bewegt wird.

Weiter kann ein Dämpfungsmechanismus vorhanden sein, welcher verhindert, dass das zweite Brühmodulteil - bzw. das Bedienelement - bei der entsprechenden durch die Feder verursachten Bewegung zu sehr beschleunigt wird und dadurch gegen einen Anschlag schnellt. Ein solcher Dämpfungsmechanismus kann im Energiespeicher selbst oder separat davon ausgebildet sein. In einem Beispiel ist der Energiespeicher eine Gasdruckfeder. Eine solche hat den Vorteil, dass ein Dämpfungsmechanismus gleich in die Feder integriert werden kann.

Zum Bewegen des zweiten Brühmodulteils in die zweite Brühmodulteil-Position übt der Energiespeicher beispielsweise direkt oder indirekt eine Kraft auf das zweite Brühmodulteil in Richtung der zweiten Brühmodulteil-Position und auf das Bedienelement in Richtung erste Position aus: Wenn der Energiespeicher gefüllt und das zweite Brühmodulteil nicht blockiert ist, schliesst sich die Brühkammer, wenn der Energiespeicher gefüllt und das Bedienelement nicht blockiert ist, bewegt sich das Bedienelement zurück in Richtung erste Position. Letzteres kann benutzt werden, wenn ein Zubereitungsvorgang abgebrochen werden soll, d.h. wenn die Kapseleinlegeöffnung wieder zugänglich sein soll, damit die Kapsel entnommen werden kann.

Insbesondere wenn ein solcher Energiespeicher eine Feder ist, bspw. eine Druckluftfeder, kann die Blasvorrichtung beispielsweise parallel zum Energiespeicher angeordnet sein, d.h. zwischen denselben zwei Achsen gelagert sein, die sich im Betrieb beim Laden und Entladen des Energiespeichers relativ zueinander bewegen.

Ausführungsformen mit Energiespeicher können einen ersten Verriegelungsmechanismus aufweisen, der eingerichtet ist, je nach Zustand eine Bewegung des zweiten Brühmodulteils von der ersten Brühmodulteilposition weg zu verhindern oder freizugeben.

Ergänzend oder alternativ können solche Ausführungsformen einen zweiten Verriegelungsmechanismus aufweisen, der eingerichtet ist, je nach Zustand eine Bewegung des Bedienelements weg von der zweiten Bedienelement-Position zu verhindern oder freizugeben.

In einer zweiten Gruppe von Ausführungsformen ist der Antrieb ein motorischer Antrieb. Auch von einem solchen kann über den Übertragungsmechanismus eine lineare Bewegung des Brühmodulteile relativ zueinander bewirkt werden. Der Antrieb der Blasvorrichtung erfolgt dann bevorzugt, indem diese zwischen Elementen des Übertragungsmechanismus, dem zweiten Brühmodulteil und/oder einem gehäusefesten Punkt angeordnet ist.

Sowohl in Ausführungsformen der ersten Gruppe als auch in Ausführungsformen der zweiten Gruppe kann die Blasvorrichtung zwischen einem ersten, mit dem zweiten Brühmodulteil verbundenen Ankopplungspunkt und einem zweiten, beispielsweise gehäusefesten Ankopplungspunkt angeordnet sein.

In weiteren Ausführungsformen ist die Blasvorrichtung zwischen (anderen) Elementen eines Hebelmechanismus angeordnet, welcher den Übertragungsmechanismus bildet.

Besonders vorteilhaft ist eine Anordnung, die einen Luftstrom zur Kapselerkennungsvorrichtung unmittelbar vor der Kapselerkennung bewirkt. Dies ist insbesondere der Fall bei Anordnungen, bei denen die Blasvorrichtung direkt oder über den Übertragungsmechanismus durch Bewegen des Betätigungselements betätigt wird.

Das zweite Brühmodulteil ist beispielsweise relativ zum ersten Brühmodulteil bewegbar, indem das erste Brühmodulteil gehäusefest montiert ist und das zweite Brühmodulteil relativ zum Gehäuse, insbesondere linear-translatorisch, insbesondere horizontal bewegt wird. Auch eine Bewegung beider Brühmodulteile relativ zum Gehäuse oder eine Bewegung bloss des ersten Brühmodulteils relativ zum Gehäuse ist jedoch nicht ausgeschlossen.

Das zweite Brühmodulteil kann ein Injektor sein, durch welchen die Portionskapsel angestochen wird und von welchem beispielsweise heisses Wasser als Brühflüssigkeit in die Portionskapsel eingeleitet wird. Das erste Brühmodulteil kann eine Ausleitvorrichtung zum Ausleiten des Extraktionsprodukts aus der Kapsel bilden. Zu diesem Zweck weist es beispielsweise extraktionsseitige Anstechelemente zum extraktionsseitigen Anstechen der Kapsel oder andere Strukturen auf, welche die Kapsel extraktionsseitig öffnen.

Die Kapselerkennungsvorrichtung ist eingerichtet, eine optische Kapselerkennung vorzunehmen, d.h. optische Merkmale der Portionskapsel über einen optischen Sensor auszulesen. Dazu kann auch ein Beleuchtungsmittel vorhanden sein, welches die Kapsel kontrolliert beleuchtet. Der optische Sensor ist insbesondere eine Kamera und weist zu diesem Zweck einen Kamerasensor mit einem Sensorarray (bspw. CCD- oder CMOS-Array) auf.

Mit einer solchen Kapselerkennungsvorrichtung kann - das ist an sich bekannt - erstens bestimmt werden, ob die eingelegte Kapsel überhaupt für eine Verwendung in der Getränkezubereitungsmaschine geeignet ist oder nicht. Zweitens besteht die Möglichkeit, aufgrund erkannter Kapseleigenschaften an den Benutzer entsprechende Informationen auszugeben, bspw. über ein Display. Es kann beispielsweise der Getränketyp (Kaffee, Tee, etc.), die Sorte (z.B. "100% Arabica"), die empfohlene Zubereitungsart (z.B. "Espresso", "Ristretto" oder "Lungo" etc.) und/oder eine andere Information angezeigt werden. Drittens kann auch das von der Kaffeemaschine für die Brühung verwendete Programm aufgrund der erkannten Kapselsorte gewählt werden, bspw. können der Brühdruck, die Brühdauer sowie eventuell auch die Temperatur und/oder andere Eigenschaften abhängig davon eingestellt werden, ob die eingelegte Kapsel für die Zubereitung von z.B. Ristretto, Espresso oder Lungo vorgesehen ist.

Geeignete optisch auslesbare Merkmale sind beispielsweise ein Strichcode, ein 2D-MatrixCode (bspw. QR-Code oder Aztec-Code), ein Piktogramm (Icon) und/oder auch eine bestimmte Farbgebung. Auch ein Code gemäss WO 2016/091859, WO 2016/091860 und/oder WO 2016/091861 kommt in Frage.

Im Kontext des vorliegenden Lehre wird die Kapselerkennungsvorrichtung dem Brühmodul zugeordnet, da sie zu demjenigen Teil der Getränkezubereitungsmaschine gehört, welches die Kapsel aufnimmt und mit ihr wechselwirkt, welcher Teil in diesem Text eben Brühmodul genannt wird. Ein Brühmodul im Sinne des vorliegenden Texts kann, muss aber nicht als separates, eigenständiges und auswechselbares Modul vorhanden sein. Es kann sich auch aus verschiedenen, in die Getränkezubereitungsmaschine integrierten Komponenten zusammengesetzt sein.

Die Kapselerkennungsposition, an welcher das Erkennen der optischen Merkmale stattfindet, ist vorzugsweise von der Brühposition verschieden und kann bspw. oberhalb dieser sein.

Vor oder während der Bewegung des zweiten Brühmodulteils relativ zum ersten Brühmodulteil zum Schliessen der Brühkammer erfolgt in diesen Ausführungsformen ein Transport der Kapsel von der Kapselerkennungsposition in die Brühposition, bspw. indem sie nach unten fällt. Zu diesem Zweck kann bspw. vorgesehen sein, dass ein Haltemittel, welches die Kapsel an der Kapselerkennungsposition mindestens teilweise untergreift, zurückgezogen wird.

Eingangsseitig kann die Blasvorrichtung - beispielsweise über einen Luftansaugschlauch - mit einem Bereich der Getränkezubereitungsmaschine verbunden sein, in welchem sich besonders trockene und/oder besonders warme Luft befindet, insbesondere in einer Umgebung des Wassererhitzungsmittels. Ein solcher Bereich kann innerhalb oder ausserhalb des Getränkezubereitungsmaschinengehäuses liegen. In einem Ausführungsbeispiel führt der Luftansaugschlauch zu einem Ort neben den Wassererhitzungsmitteln, wo aufgrund entstehender Abwärme eine leicht erhöhte Temperatur herrscht und die Luft daher vorgewärmt wird.

Die Erfindung betrifft auch eine Getränkezubereitungsmaschine mit einem Brühmodul der diskutierten Art.

Nachfolgend werden Ausführungsbeispiele der Erfindung anhand von Figuren beschrieben. In den Figuren bezeichnen gleiche Bezugszeichen gleiche oder analoge Elemente. Es zeigen:
- Fig. 1: eine Seitenansicht eines Brühmoduls, wobei einige Teile, insbesondere Gehäuseteile ausgeblendet sind;
- Fig. 2: eine Seitenansicht des Brühmoduls gemäss Fig. 1 während der Kapselerkennung;
- Fig. 3: eine Seitenansicht des Brühmoduls gemäss Fig. 1 und 2 während des Brühprozesses;
- Fig. 4: ein Detail des Brühmoduls gemäss Fig. 1-3, welches den zweiten Verriegelungsmechanismus erkennen lässt,
- Fig. 5: eine Detailansicht des Brühmoduls gemäss Fig. 1-4, und
- Fig. 6: ein Schema einer erfindungsgemässen Kaffeemaschine.

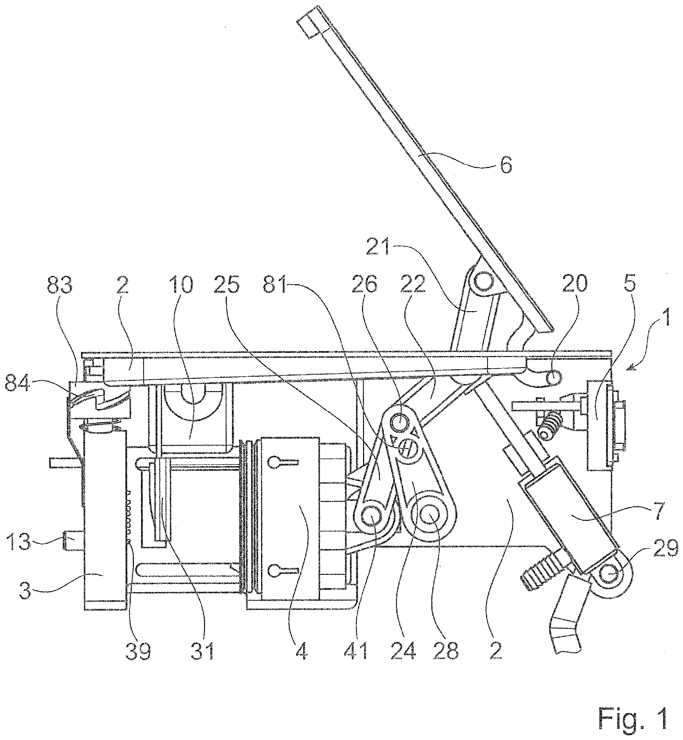

Das Brühmodul 1 gemäss **Figuren 1-5****,** weist ein Brühmodulgehäuse 2 auf. Im Brühmodulgehäuse 2 sind zwei relativ zueinander bewegbare Brühmodulteile geführt, nämlich eine Ausleitvorrichtung 3 und ein Injektor 4.

Der Injektor 4 weist Perforationselemente zum Anstechen einer Portionskapsel 10 auf, die mindestens teilweise mit einem Extraktionsgut - bspw. gemahlenem Kaffee - gefüllt ist. Der Injektor 4 ist eingerichtet, eine Flüssigkeit - bspw. heisses Wasser - durch die Perforationselemente oder an diesen vorbei in die angestochene Kapsel einzubringen wobei das Wasser über eine Wasserzuführung (nicht gezeigt) zuführbar ist, die bspw. einen flexiblen Schlauch aufweisen kann.

Auch die Ausleitvorrichtung 3 weist im hier beschriebenen Ausführungsbeispiel Perforationselemente auf, nämlich extraktionsseitige Anstechspitzen 39. Diese können beispielsweise ausgebildet sein wie in WO 2015/039258 oder in WO 2010/118544 beschrieben oder eine andere Ausgestaltung aufweisen; auch die Verwendung von anderen Prinzipien als Anstechspitzen, bspw. mit gitterrostartigen Strukturen, sind möglich.

Ausserdem weist die Ausleitvorrichtung beidseits der Kapsel zur Injektorseite hin ragende Führungsmittel 31 auf, wie sie beispielsweise in WO 2015/048914 beschrieben sind, auf deren Inhalt hier betreffend die Funktionsweise dieser Führungsmittel ausdrücklich Bezug genommen wird.

Für die Zubereitung eines Brühgetränks wird wie an sich bekannt eine Kapsel zwischen der Ausleitvorrichtung 3 und dem Injektor 4 platziert, und diese werden so aufeinander zubewegt, dass zwischen diesen eine die Kapsel umfassende Brühkammer gebildet wird. Das heisse Wasser wird durch den Injektor unter Druck der Kapsel zugeführt, und das Extraktionsprodukt fliesst durch die Ausleitvorrichtung 3 via einen Getränkeauslauf 13 in ein bspw. darunter platziertes Trinkgefäss ab.

Die relative Bewegung des zweiten Brühmodulteils (Injektor) relativ zum ersten Brühmodulteil (Ausleitvorrichtung) wird im hier beschriebenen Ausführungsbeispiel dadurch erreicht, dass die Ausleitvorrichtung 3 gehäusefest montiert ist, während der Injektor 4 entlang der horizontalen Achse bewegbar ist.

Über der zwischen den Ausleitvorrichtung 3 und Injektor 4 liegenden Brühposition befindet sich eine Kapselerkennungsposition, in welche die Kapsel nach Einlegen durch eine Kapseleinlegeöffnung gelangt. Nebst der der Brühkammereinheit mit Ausleitvorrichtung 3 und Injektor 4 weist das Brühmodul dementsprechend eine Kapselerkennungsvorrichtung 5 mit Kamera auf, deren Aufbau beispielsweise mindestens teilweise dem in WO 2016/087190 beschriebenen Aufbau entspricht.

Das Brühmodul ist insbesondere eingerichtet, die durch die Kapseleinlegeöffnung eingelegte Kapsel in der Kapselerkennungsposition zu halten bevor sie nach erfolgreicher Kapselerkennung und ggf. nach einem weiteren Schritt (bspw. Auslösen der Brühung durch den Benutzer) nach unten in die Brühposition gelangt. Zu diesem Zweck kann ein bspw. Mechanismus vorhanden sein, der ein die Kapsel an der Kapselerkennungsposition untergreifendes, für den Übergang in die Brühposition elektromechanisch gesteuert rückziehbares Element umfasst. Auch andere, bspw. rein mechanisch arbeitende Mechanismen sind denkbar.

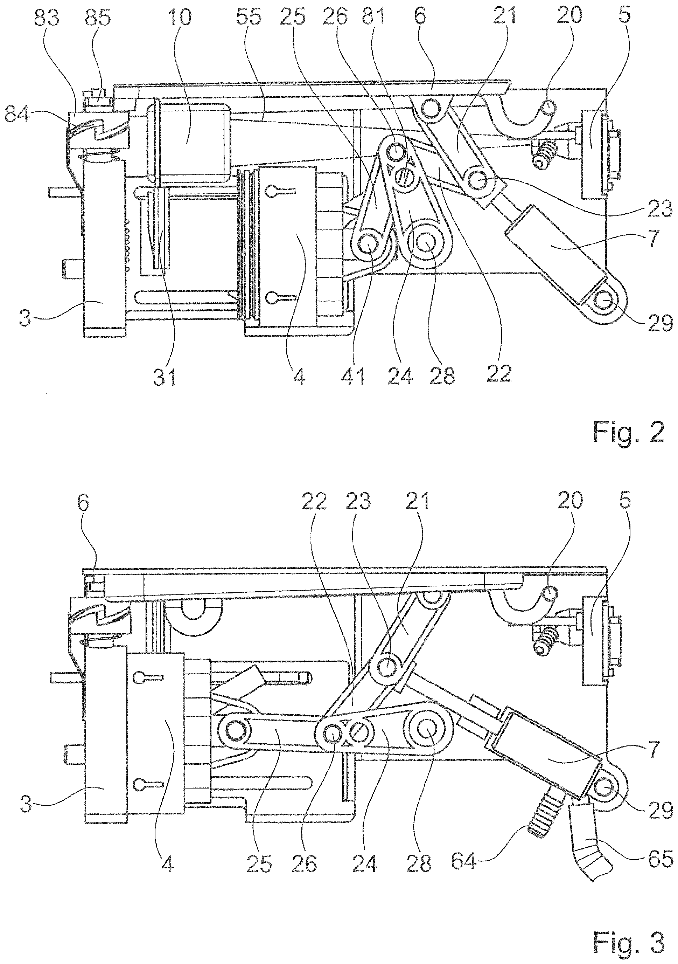

Für die Bedienung durch den Benutzer zwecks Schliessen der Brühkammer weist das Brühmodul einen Bedienhebel 6 auf, der an einer ersten fixen Lagerstelle 20 gelagert und um diese schwenkbar ist. Der Übertragungsmechanismus vom Bedienhebel 6 zum Injektor 4 ist ein Hebelmechanismus und umfasst einen ersten Kniehebel und einen zweiten Kniehebel. Der erste Kniehebel wird durch einen am Bedienhebel angreifenden ersten Hebelarm 21 und einen zweiten Hebelarm 22 gebildet die über einen ersten Kniehebelbolzen 23 schwenkbar miteinander verbunden sind, so dass sich ein erstes Kniegelenk bildet. Der zweite Kniehebel wird durch einen dritten Hebelarm 24 und einen vierten Hebelarm 25 gebildet, die über einen zweiten Kniehebelbolzen 26 schwenkbar miteinander verbunden sind, so dass ein zweites Kniegelenk gebildet wird. Der dritte Hebelarm 24 ist an einer zweiten fixen Lagerstelle 28 gelagert und um diese schwenkbar. Der vierte Hebelarm 25 greift am Injektor 4 an und ist um einen Lagerzapfen 41 des Injektors 4 schwenkbar. Der Injektor 4 ist so gelagert, dass er zwischen der ersten Brühmodulteil-Position (in Fig. 1 dargestellt) und der zweiten Brühmodulteil-Position (in Fig. 3 sichtbar) horizontal verschiebbar ist.

Der zweite Hebelarm 22 greift am zweiten Kniegelenk an, beispielsweise indem er mit dem zweiten Kniehebelbolzen 26 in Eingriff steht.

Am ersten Kniegelenk greift eine Gasdruckfeder 7 an, die sich zwischen einer dritten fixen Lagerstelle 29, um welche die Gasdruckfeder schwenkbar ist, und dem ersten Kniegelenk erstreckt, wobei sie bspw. mit dem ersten Kniehebelbolzen 23 im Eingriff steht.

Das Brühmodul weist ausserdem zwei Verriegelungsmechanismen auf.

Ein erster Verriegelungsmechanismus ist eingerichtet, eine Bewegung des zweiten Brühmodulteils von der ersten Brühmodulteilposition weg zu verhindern. Im dargestellten Ausführungsbeispiel weist der erste Verriegelungsmechanismus einen bspw. magnetisch ausgelöst in axialer Richtung verschiebbaren Verriegelungsbolzen 81 auf, welcher mit dem dritten und vierten Hebelarm in Eingriff bringbar ist, um im Blockierzustand ein Verschwenken des dritten und vierten Hebelarms relativ zueinander zu verhindern, was - da der dritte Hebelarm mit einer fixen Lagerstelle verbunden ist - auch eine Bewegung des Injektors 4 ganz verhindert. Alternativ wäre es auch möglich, einen Verriegelungsmechanismus vorzusehen, der direkt mit dem Injektor in Eingriff bringbar ist, oder der eingerichtet ist, eine Bewegung des dritten oder vierten Hebelarms relativ zum Gehäuse zu verhindern.

Ein zweiter Verriegelungsmechanismus ist eingerichtet, den Bedienhebel 6 relativ zum Gehäuse 2 zu blockieren. In der dargestellten Ausführungsform funktioniert der zweite Verriegelungsmechanismus nach dem bekannten sogenannten Kugelschreiber-Prinzip. Dazu ist eine Verriegelungshülse 83 vorhanden, welche durch den Bedienhebel selbst entgegen einer Federkraft nach unten gedrückt werden kann, und welche so geführt ist, dass sie bei jedem Drücken nach unten um einen vorgegebenen Winkel - bspw. 90° - gedreht wird. Die Drehung kann bspw. in an sich bekannter Art durch eine Steuernut 84 der Verriegelungshülse bewirkt werden, in welche ein Steuerungszapfen (in den Figuren nicht sichtbar) eingreift. Je nach eingenommener Orientierung blockiert die Verriegelungshülse eine Bewegung des Bedienhebels weg von der zweiten Bedienelement-Position (Fig. 2 und Fig. 3) mittels Verriegelungsflügel 85 oder gibt sie frei.

Die beschriebene Einrichtung ermöglicht folgenden Bedienablauf:
Im geöffneten Zustand, in welchem der Bedienhebel 6 nach oben verschwenkt, an der ersten Bedienelement-Position ist (Fig. 1), kann die Kapsel 10 durch die Kapseleinlegeöffnung eingelegt werden und gelangt so in die Kapselerkennungsposition.

Daraufhin betätigt der Benutzer den Bedienhebel 6 entgegen der Federkraft der Gasdruckfeder 7, während der erste Verriegelungsmechanismus das zweite Brühmodulteil blockiert. Der Bedienhebel gelangt von der ersten Bedienelement-Position in die zweite Bedienelement-Position. Dort wird der Bedienhebel durch den zweiten Verriegelungsmechanismus verriegelt.

Durch das Bringen des Bedienhebels in die zweite Bedienelement-Position wird im dargestellten Ausführungsbeispiel auch das Brühmodul verschlossen, womit bspw. auch verbunden sein kann, dass die Kapsel an der Kapselerkennungsposition von Umgebungslicht abgeschirmt wird.

Dann findet, bspw. selbsttätig, d.h. ohne weiteres Zutun durch den Benutzer (ein entsprechender Sensor, bspw. Schalter, kann feststellen, dass der Bedienhebel an der zweiten Bedienhebel-Position ist) die Kapselerkennung statt. Fig. 2 zeigt das Brühmodul während der Kapselerkennung. Die Kapselerkennung kann bspw. beinhalten, dass die Kapsel 10 beleuchtet wird - ein Lichtstrahl 55 ist in Fig. 2 angedeutet - und die beleuchtete Kapsel von der Kamera erfasst wird, woraufhin ein Code an der Kapsel oder eine Farbgebung oder ähnlich ausgewertet wird.

Ausgelöst durch die erfolgreiche Kapselerkennung oder durch eine Aktion des Benutzers wird anschliessend ein Bewegen der Kapsel nach unten bewirkt und die Brühkammer geschlossen. Dazu wird die Blockierung durch den ersten Verriegelungsmechanismus aufgehoben, bspw. durch einen Elektromagneten, welcher den Verriegelungsbolzen 81 axial verschiebt und so aus dem Eingriff mit dem dritten Hebelarm 24 löst. Aufgrund der durch die Gasdruckfeder ausgeübten Federkraft wird dadurch das erste Kniegelenk und als Folge auch das zweite Kniegelenk gestreckt, was den Injektor 4 bewegt und die Brühkammer schliesst, während sich die Kapsel darin befindet.

Dann kann der Brühprozess in an sich bekannter Art erfolgen, indem heisses Wasser unter Druck in die beim Schliessen der Brühkammer angestochene Kapsel eingeleitet und das entstehende Brühgetränk aus über die Ausleitvorrichtung aus dieser abgeleitet wird.

Nach erfolgter Brühung wird die Blockierung durch den zweiten Verriegelungsmechanismus wieder aufgehoben, indem der Benutzer den Bedienhebel leicht nach unten drückt, woraufhin der Benutzer den Bedienhebel nach oben ziehen kann. Aufgrund der Steifigkeit der Gasdruckfeder wird durch diese Bewegung auch der zweite Kniehebel gebeugt und in die in Fig. 1 dargestellte Stellung gebracht, woraufhin der erste Verriegelungsmechanismus den zweiten Knieheben sperren kann. Durch das Öffnen kann auch bewirkt werden, dass die gebrauchte Kapsel nach unten in deinen Kapselbehälter fällt. Ein entsprechender Mechanismus ist beispielsweise in WO 2015/048914 beschrieben.

Wenn der Benutzer nach erfolgter Kapselerkennung die Kapsel entnehmen möchte anstatt sie in die Brühposition zu bringen und die Brühkammer zu schliessen - bspw. wenn sich aufgrund der Kapselerkennung herausstellt, dass die gewählte Kapsel für das gewünschte Getränk nicht geeignet ist - kann der Benutzer durch Drücken des Bedienhebels nach unten die Blockierung durch den zweiten Verriegelungsmechanismus aufheben. Daraufhin drückt die Gasdruckfeder den Bedienhebel wieder nach oben, und der Benutzer kann die Kapsel aus der Kapselerkennungsposition entfernen.

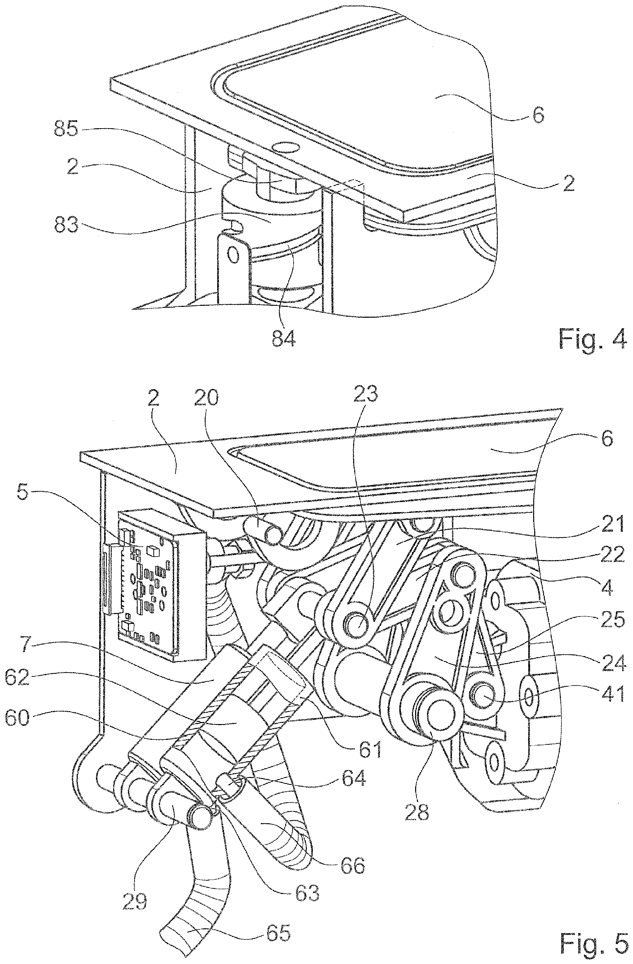

Ein weiteres Merkmal ist in Fig. 5 besonders gut sichtbar. Mit dem Hebelmechanismus ist nebst den vorstehend beschriebenen Elementen auch eine Blasvorrichtung 60 - funktionell einem Blasebalg entsprechend - verbunden. Diese weist hier einen Zylinder 61 und einen im Zylinder verschiebbaren Kolben 62 auf.

Der Zylinder 61 ist schwenkbar an der dritten fixen Lagerstelle 29 gelagert, während der Kolben 62 über einen Pleuel mit dem ersten Kniehebelbolzen verbunden ist, so dass beim Spannen oder Entspannen der Gasdruckfeder auch der Kolben 62 im Zylinder bewegt wird. Ein aktives Volumen, welches durch Verschiebung des Kolbens 62 im Zylinder vergrössert oder verkleinert wird, bildet sich in der dargestellten Orientierung unterhalb des Kolbens 62, in Fig. 5 links unterhalb des Kolbens.

In das aktive Volumen des Zylinders 61 münden zwei Luftanschlüsse 63, 64.

Ein erster Luftanschluss 63 ist mit einem Luftansaugschlauch 65 verbunden, durch welchen Luft angesaugt werden kann. Der Schlauch führt bspw. zu einem Ort innerhalb oder ausserhalb eines Getränkezubereitungsmaschinengehäuses, an welchem damit zu rechnen ist, dass besonders trockene und/oder besonders warme Luft vorhanden ist. In einem Ausführungsbeispiel führt der Luftansaugschlauch zu einem Ort neben den Wassererhitzungsmitteln, wo aufgrund entstehender Abwärme eine leicht erhöhte Temperatur herrscht und die Luft daher vorgewärmt wird.

An einen zweiten Luftanschluss 64 ist ein Verbindungsschlauch 66 angeschlossen, welcher zu einem Bereich der Kapselerkennungsvorrichtung 5 führt, der zur Kapselerkennungsposition hin unmittelbar an eine Linse oder ein Fenster angrenzt, welche bzw. welches zwischen dem Kamerasensor (bspw. mit einem CCD oder CMOS-Sensorarray) und der Kapselerkennungsposition angeordnet ist und bspw. verhindert, dass heisse Dämpfe aus der Brühkammer zum Kamerasensor gelangen.

Der erste und der zweite Luftanschluss 62, 63 und/oder die entsprechenden daran angeschlossenen Schläuche 65, 66 sind je mit einem Ventilmittel versehen - bspw. einen einfachen Ventil, wie es vom Prinzip her zum Aufblasen von Luftballons verwendet wird - welche bewirken, dass durch den ersten Luftanschluss Luft nur angesaugt, nicht aber ausgeblasen werden kann und durch den zweiten Luftanschluss umgekehrt nur Luft ausgeblasen, nicht aber angesaugt werden kann.

Die Blasvorrichtung 60 ist parallel zur Luftdruckfeder 7 angeordnet. Dadurch wird beim Spannen der Luftdruckfeder 7 durch Betätigen des Bedienhebels 6 die im Zylinder 61 vorhandene Luft durch den Verbindungsschlauch vor die Linse bzw. das Fenster geblasen, wodurch ein eventueller Beschlag oder eine Verschmutzung entfernt wird und/oder einem Beschlagen/verschmutzen vorgebeugt wird. Beim Entspannen der Gasdruckfeder beim Verschliessen der Brühkammer wird der Kolben wieder zurückbewegt, wodurch Luft angesaugt wird.

Eine mechanisch angetriebene Blasvorrichtung der beschriebenen Art kann auch an einer anderen Stelle als der beschriebenen im Brühmodul angeordnet sein und durch Relativbewegungen von Elementen betätigt werden, bspw. parallel zum ersten Kniehebel oder eventuell zum zweiten Kniehebel oder zwischen dem Brühmodulgehäuse und dem Injektor. Besonders vorteilhaft ist eine Anordnung, die wie im beschriebenen Ausführungsbeispiel einen Luftstrom zur Kapselerkennungsvorrichtung unmittelbar vor der Kapselerkennung bewirkt.

In Fig. 5 sieht man auch, dass im vorliegenden Ausführungsbeispiel jeder Hebelarm aus je zwei Hebelarmelementen aufgebaut ist, die symmetrisch zu einer vertikalen Mittelebene angeordnet sind, was aber keine Notwendigkeit ist. Die in diesem Text beschriebenen Drehpunkte sind demnach als Drehachsen ausgebildet oder beinhalten zwei miteinander fluchtende Drehpunkte, symmetrisch zur vertikalen Mittelebene.

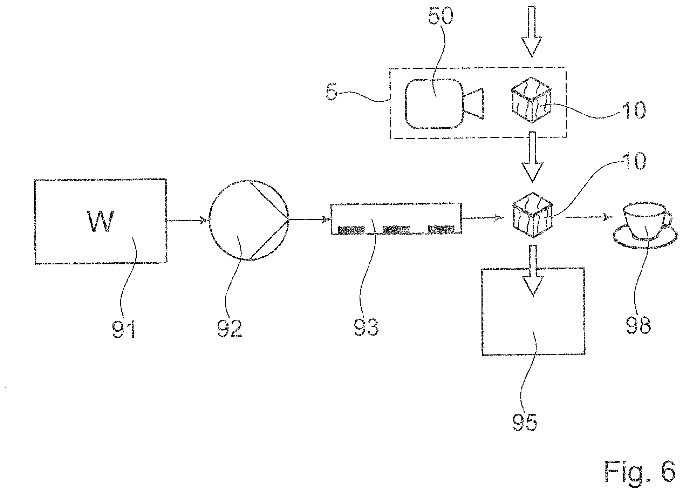

Eine erfindungsgemässe Maschine zum Zubereiten eines Brühgetränks aus einer Portionskapsel 10, nämlich hier eine Kaffeemaschine, mit einem Brühmodul ist in **Figur 6** schematisch dargestellt. Sie weist nebst dem Brühmodul einen Wassertank 91, eine Pumpe 92 zum Zuführen von Brühwasser zum Injektor 4 und eine Wasserheizungsvorrichtung 93 (bspw. Durchlauferhitzer) auf. Das Kapselerkennungsmodul 5 mit Kamera 50 befindet sich insbesondere oberhalb der Brühkammer. Eine eingelegte Kapsel kann nach dem Kapselerkennungsprozess wie vorstehend beschrieben durch die Wirkung der Schwerkraft nach unten weitertransportiert werden. Unterhalb des Brühmoduls ist ausserdem ein Kapselbehälter 95 angeordnet, in welchen die Kapseln 1 nach dem Brühprozess fallen bzw. transportiert werden. Das Bezugszeichen 98 bezeichnet eine Kaffeetasse.

### Bezugszeichenliste:

- 1: Brühmodul
- 2: Brühmodulgehäuse
- 3: Ausleitvorrichtung
- 4: Injektor
- 5: Kapselerkennungsvorrichtung
- 6: Bedienhebel
- 7: Gasdruckfeder
- 10: Portionskapsel
- 13: Getränkeauslauf
- 20: erste fixe Lagerstelle
- 21: Erster Hebelarm
- 22: zweiter Hebelarm
- 23: erster Kniehebelbolzen
- 24: dritter Hebelarm
- 25: vierter Hebelarm
- 26: zweiter Kniehebelbolzen
- 28: zweite fixe Lagerstelle
- 29: dritte fixe Lagerstelles
- 31: Führungsmittel
- 39: extraktionsseitige Anstechspitzen
- 41: Lagerzapfen
- 50: Kamera
- 55: Lichtstrahl
- 60: Blasvorrichtung
- 61: Zylinder
- 62: Kolben
- 63: erster Luftanschluss
- 64: zweiter Luftanschluss
- 65: Luftansaugschlauch
- 66: Verbindungsschlauch
- 81: Verriegelungsbolzen
- 83: Verriegelungshülse
- 84: Steuernut
- 85: Verriegelungsflügel
- 91: Wassertank
- 92: Pumpe
- 93: Wasserheizungsvorrichtung
- 95: Kapselbehälter
- 98: Kaffeetasse

## Patentansprüche

1. Brühmodul zum Zubereiten eines Brühgetränks aus einer Portionskapsel, aufweisend:
• ein erstes Brühmodulteil (3) und ein relativ zu diesem zwischen einer ersten Brühmodulteil-Position und einer zweiten Brühmodulteil-Position bewegbares zweites Brühmodulteil (4),
∘ wobei eine Bewegung des zweiten Brühmodulteils (4) relativ zum ersten Brühmodulteil (3) von einem manuellen oder motorisierten Antrieb über einen Übertragungsmechanismus antreibbar ist,
∘ wobei in der zweiten Brühmodulteil-Position eine Brühkammer gebildet wird, welche die sich in einer Brühposition befindende Portionskapsel (10) beim Brühvorgang mindestens teilweise umgibt, wobei das Brühmodul eingerichtet ist, durch das Einleiten einer Brühflüssigkeit in die Portionskapsel ein Brühgetränk zu brühen und dieses aus der Portionskapsel abzuleiten;
• und eine Kapselerkennungsvorrichtung (5) mit einem optischen Sensor zum Erfassen von optischen Eigenschaften der Portionskapsel (10), welche sich an einer Kapselerkennungsposition befindet, sowie mit einem Fensterelement aus einem transparenten Material zwischen der Kapselerkennungsposition und dem optischen Sensor,
**gekennzeichnet durch** eine mechanisch antreibbare Blasvorrichtung (60) zum Erzeugen eines Luftstroms, welche angeordnet ist, einen Luftstrom auf der Seite des Fensterelements zur Kapselerkennungsposition hin zu erzeugen, indem sie durch eine Relativbewegung von Elementen des Brühmoduls angetrieben wird, welche Relativbewegung durch den Antrieb oder den Übertragungsmechanismus erzeugt wird.

2. Brühmodul nach Anspruch 1, wobei die Blasvorrichtung (60) ein erstes Blasvorrichtung-Element und ein zweites Blasvorrichtung-Element aufweist, zwischen denen sich ein aktives Volumen bildet, welches durch eine Relativbewegung des ersten und zweiten Blasvorrichtung-Elements vergrösser- oder verkleinerbar ist, und wobei das aktive Volumen mit mindestens einem Luftanschluss (63, 64) verbunden ist, durch welchen beim Bewegen des ersten und zweiten Blasvorrichtung-Elements relativ zueinander Luft ins aktive Volumen gesaugt oder Luft aus dem aktiven Volumen geblasen wird.

3. Brühmodul nach Anspruch 2, aufweisend zwei Luftanschlüsse, wobei ein erster Luftanschluss (63) mit einem ersten Ventil versehen oder verbunden ist, welches nur einen Luftstrom ins aktive Volumen hinein ermöglicht und ein zweiter Luftanschluss (64) mit einem zweiten Ventil versehen oder verbunden ist, welches nur einen Luftstrom aus dem aktiven Volumen hinaus ermöglicht.

4. Brühmodul nach Anspruch 3, wobei der erste Luftanschluss (63) mit einem Luftansaugschlauch (65) verbunden ist, und der zweite Luftanschluss (64) mit einem zum Fensterelement führenden Verbindungsschlauch (66) verbunden ist.

5. Brühmodul nach einem der Ansprüche 2-4, wobei das erste Blasvorrichtung-Element ein Zylinder (61) und das zweite Blasvorrichtung-Element ein darin verschiebbarer Kolben (62) ist, welcher durch Bewegung im Zylinder das aktive Volumen vergrössert oder verkleinert.

6. Brühmodul nach einem der vorangehenden Ansprüche, wobei der Antrieb ein mechanischer Antrieb ist und ein manuell zwischen einer ersten Bedienelement-Position und einer zweite Bedienelement-Position bewegbares Bedienelement (6) aufweist.

7. Brühmodul nach Anspruch 6, wobei die Blasvorrichtung (60) zwischen einem ersten, am Bedienelement angeordneten Ankopplungspunkt und einem zweiten, beispielsweise gehäusefesten Ankopplungspunkt angeordnet ist.

8. Brühmodul nach Anspruch 6 oder 7, aufweisend einen Energiespeicher (7), der eingerichtet ist, durch Bewegen des Bedienelements von der ersten in die zweite Position in das Brühmodul eingekoppelte Energie zwischenzuspeichern und durch eine Freigabe ausgelöst in eine Bewegung von der ersten Brühmodulteil-Position in die zweite Brühmodulteil-Position wieder umzusetzen.

9. Brühmodul nach Anspruch 8, wobei die Blasvorrichtung (60) parallel zum Energiespeicher (7) angeordnet ist.

10. Brühmodul nach einem der vorangehenden Ansprüche, wobei die Kapselerkennungsposition oberhalb der Brühposition ist.

11. Getränkezubereitungsmaschine, insbesondere Kaffeemaschine, aufweisend eine Wasserzufuhr, eine Pumpe (92) und ein Wassererhitzungsmittel (93) sowie ein Brühmodul nach einem der vorangehenden Ansprüche.

12. Getränkezubereitungsmaschine nach Anspruch 11, wobei die Blasvorrichtung zwei Luftanschlüsse (63, 64) aufweist, wovon ein erster Luftanschluss (63) mit einem Luftansaugschlauch (65) verbunden ist, und wobei der Luftansaugschlauch (65) von einer Umgebung der Wassererhitzungsmittel (93) zur Blasvorrichtung führt, um von den Wassererhitzungsmitteln erzeugte Abwärme zu nutzen.

## Claims

1. A brewing module for preparing a brewed drink from a portion capsule, comprising:
• a first brewing module part (3) and a second brewing module part (4), the second brewing module part (4) being movable relative to said first brewing module part (3) between a first brewing module part position and a second brewing module part position,
∘ wherein a movement of the second brewing module part (4) relative to the first brewing module part (3) can be driven by a manual or motorised drive via a transmission mechanism,
∘ wherein, in the second brewing module part position, a brewing chamber is formed which during a brewing procedure at least partly surrounds the portion capsule (10) situated in a brewing position, wherein the brewing module is configured to brew a brewed drink by way of introducing a brewing fluid into the portion capsule and to discharge said brewed drink out of the capsule; and
• and a capsule recognition device (5) with an optical sensor for detecting optical characteristics of the portion capsule (10) located at a capsule recognition position, as well as with a window element of a transparent material between the capsule recognition position and the optical sensor,
**characterised by** a mechanically driveable blowing device (60) for producing an airflow, said blowing device being arranged to produce an airflow at the side of the window element towards the capsule recognition position by way of it being driven by a relative movement of elements of the brewing module, said relative movement being produced by the drive or the transmission mechanism.

2. A brewing module according to claim 1, wherein the blowing device (60) comprises a first blowing device element and a second blowing device element, between which an active volume forms, wherein said active volume can to be enlarged or reduced by a relative movement of the first and the second blowing device element, and wherein the active volume is connected to at least one air connection (63, 64), through which air is sucked into the active volume or air is blown out of the active volume, when moving the first and second blowing device element relative to one another.

3. A brewing module according to claim 2, comprising two air connections, wherein a first air connection (63) is provided with or is connected to a first valve which only permits an airflow into the active volume, and a second air connection (64) is provided with or is connected to a second valve which only permits an airflow out of the active volume.

4. A brewing module according to claim 3, wherein the first air connection (63) is connected to an air suction tube (65), and the second air connection (64) is connectable to a connection tube (66) leading to the window element.

5. A brewing module according to one of the claims 2-4, wherein the first blowing device element is a cylinder (61) and the second blowing device element is a piston (62) which is displaceable in said cylinger (61) and which enlarges or reduces the active volume by way of movement in the cylinder.

6. A brewing module according to one of the preceding claims, wherein the drive is a mechanical drive and comprises an operating element (6) which is manually movable between a first operating element position and a second operating element position.

7. A brewing module according to claim 6, wherein the blowing device (60) is arranged between a first coupling point which is arranged at the operating element and a second coupling point which, for example, is fixed with regard to the housing.

8. A brewing module according to claim 6 or 7, comprising an energy store (7) which is configured to intermediately store energy which is coupled into the brewing module by way of moving the operating element from the first into the second position, and to again convert it, activated by a release, into a movement from the first brewing module part position into the second brewing module part position.

9. A brewing module according to claim 8, wherein the blowing device (60) is arranged parallel to the energy store (7).

10. A brewing module according to one of the preceding claims, wherein the capsule recognition position is above the brewing position.

11. A drinks preparation machine, in particular coffee machine, comprising a water feed, a pump (92) and a water heating means (93) as well as a brewing module according to one of the preceding claims.

12. A drinks preparation machine according to claim 11, wherein the blowing device comprises two air connections (63, 64), of which a first air connection (63) is connected to an air suction tube (65), and wherein the air suction tube (65) leads from an environment of the water heating means (93) to be blowing device, in order to utilise waste heat produced by the water heating means.

## Revendications

1. Module d'infusion pour préparer une boisson infusée à partir d'une capsule de portion, le module d'infusion présentant :
- une première partie d'infusion (3) et une deuxième partie d'infusion (4) apte à être déplacée entre une première position de la partie d'infusion et une deuxième position de la partie d'infusion,
un déplacement de la deuxième partie d'infusion (4) par rapport à la première partie d'infusion (3) pouvant être entraîné par un entraînement manuel ou motorisé par l'intermédiaire d'un mécanisme de transmission,
une chambre d'infusion qui entoure au moins en partie la capsule de portion (10) située en position d'infusion pendant l'opération d'infusion étant formée dans la deuxième position de la partie d'infusion, le module d'infusion étant conçu pour préparer une boisson infusée par introduction d'un liquide d'infusion dans la capsule de portion et faire sortir de la capsule de portion la boisson infusée,
- et un ensemble (5) de détection de capsule doté d'un capteur optique qui saisit des propriétés optiques de la capsule de portion (10) placée en position de détection de capsule ainsi que d'un élément de fenêtre en matériau transparent, disposé entre la position de détection de capsule et le capteur optique,
**caractérisé par**
un ensemble de soufflage (60) pouvant être entraîné mécaniquement en vue de former un écoulement d'air et disposé de manière à produire un écoulement d'air sur le côté de l'élément de fenêtre orienté vers la position de détection de capsule en étant entraîné par un déplacement relatif d'éléments du module d'infusion, ce déplacement relatif étant provoqué par l'entraînement ou par le mécanisme de transmission.

2. Module d'infusion selon la revendication 1, dans lequel l'ensemble de soufflage (60) présente un premier élément de soufflage et un deuxième élément de soufflage entre lesquels se forme un volume actif qui peut augmenter ou diminuer lors d'un déplacement relatif entre le premier et le deuxième élément de l'ensemble de soufflage, le volume actif étant relié à un ou plusieurs raccordements d'air (63, 64) par lesquels de l'air est aspiré dans le volume actif ou refoulé hors du volume actif lors d'un déplacement du premier et du deuxième élément de l'ensemble de soufflage l'un par rapport à l'autre.

3. Module d'infusion selon la revendication 2, dans lequel un premier raccordement d'air (63) est doté d'un ou raccordé à une première soupape qui permet uniquement un écoulement d'air dans le volume actif et un deuxième raccordement d'air (64) est doté d'un ou raccordé à une deuxième soupape qui permet uniquement un écoulement d'air hors du volume actif.

4. Module d'infusion selon la revendication 2, dans lequel le premier raccordement d'air (63) est relié à un conduit flexible (65) d'aspiration d'air et le deuxième raccordement d'air (64) est relié à un conduit flexible (66) qui conduit à l'élément de fenêtre.

5. Module d'infusion selon l'une des revendications 2 à 4, dans lequel le premier élément de l'ensemble de soufflage est un cylindre (61) et le deuxième élément de l'ensemble de soufflage un piston (61) qui peut y coulisser et qui augmente ou diminue le volume actif par son déplacement dans le cylindre.

6. Module d'infusion selon l'une des revendications précédentes, dans lequel l'entraînement est un entraînement mécanique et présente un élément d'actionnement (6) apte à être déplacé manuellement entre une première position de l'élément d'actionnement et une deuxième position de l'élément d'actionnement.

7. Module d'infusion selon la revendication 6, dans lequel l'ensemble de soufflage (60) est disposé entre un premier point d'accouplement disposé sur l'élément d'actionnement et un deuxième point d'accouplement par exemple fixe sur le boîtier.

8. Module d'infusion selon les revendications 6 ou 7, présentant un accumulateur d'énergie (7) conçu pour conserver temporairement l'énergie apportée dans le module d'infusion lors du déplacement de l'élément d'actionnement de la première position à la deuxième position et pour la convertir de nouveau en un déplacement de la première position de la partie du module d'infusion à la deuxième position de la partie du module d'infusion, après libération par un déclenchement.

9. Module d'infusion selon la revendication 6, dans lequel l'ensemble de soufflage (60) est disposé parallèlement à l'accumulateur d'énergie (7).

10. Module d'infusion selon l'une des revendications précédentes, dans lequel la position de détection de capsule est située au-dessus de la position d'infusion.

11. Machine de préparation de boissons, notamment machine à café, présentant une amenée d'eau, un moyen (93) de chauffage de l'eau ainsi qu'un module d'infusion selon l'une des revendications précédentes.

12. Machine de préparation de boissons selon la revendication 11, dans laquelle l'ensemble de soufflage présente deux raccordements d'air (63, 64), dont un premier raccordement d'air (63) est relié à un conduit flexible (65) d'aspiration d'air, le conduit flexible (65) d'aspiration d'air conduisant de l'environnement du moyen (93) de chauffage de l'eau à l'ensemble de soufflage pour utiliser la chaleur dégagée par le moyen de chauffage de l'eau.
